# EUROPÄISCHE PATENTANMELDUNG

(11) **EP 4 631 683 A1**
(43) Veröffentlichungstag der Anmeldung: **15.10.2025**
(21) Anmeldenummer: 25168686.1
(22) Anmeldetag: 04.04.2025
(51) Int. Cl.: B25J 15/06, B65G 47/91

(54) **SAUGGREIFER MIT VERFORMUNGSEINRICHTUNG**

(30) Priorität: 10.04.2024 DE 102024110039
(71) Anmelder: J. Schmalz GmbH, 72293 Glatten (DE)
(72) Erfinder: Schaaf, Dr. Walter, 72250 Freudenstadt-Grüntal (DE)
(74) Vertreter: DREISS Patentanwälte PartG mbB

(57) **Zusammenfassung**

Die Erfindung betrifft einen Sauggreifer (10) zum Greifen eines Gegenstands mittels Unterdruck, umfassend einen Elastomersaugkörper (14), welcher sich entlang einer Hauptrichtung (16) erstreckt, wobei der Elastomersaugkörper einen Basisabschnitt (18) und eine von dem Basisabschnitt ausgehende, flexibel verformbare Saugkörperwandung (20) aufweist, welche einen durch eine Saugöffnung (26) offenen Saugraum (24) begrenzt, außerdem umfassend eine Verformungseinrichtung (36), welche dazu ausgebildet ist, insbesondere vor dem Ansaugen eines Greifobjektes, die Saugkörperwandung zu verformen, um eine Konfiguration der Saugöffnung, insbesondere deren Form und Größe, zu verändern. Die Erfindung betrifft auch ein Verfahren zum Greifen eines Greifobjektes mit einem solchen Sauggreifer sowie eine Handhabungsanlage mit einem solchen Sauggreifer.

## Beschreibung

Die Erfindung betrifft einen Sauggreifer zum Greifen eines Gegenstands mittels Unterdruck, ein Verfahren zum Greifen eines Gegenstands unter Verwendung eines solchen Sauggreifers sowie eine Handhabungsanlage umfassend einen solchen Sauggreifer.

Sauggreifer sind in vielfältiger Art und Weise aus dem Stand der Technik bekannt und werden beispielsweise dazu verwendet, um gestapelte, starre und/oder biegeschlaffe Werkstücke zu handhaben. Insbesondere haben sich Sauggreifer etabliert, welche einen elastomeren Saugkörper aufweisen, der einen durch eine Saugöffnung offenen Saugraum begrenzt. Die Saugöffnung ist üblicherweise von einer Dichtlippe des Saugkörpers umgeben, welche zum Greifen eines Gegenstands an dessen Oberfläche angelegt oder angedrückt wird. Nach dem Anlegen der Dichtlippe an den Gegenstand wird der Sauginnenraum mit Unterdruck beaufschlagt (bspw. durch eine Pumpe, ein Gebläse, einen Ejektor oder einen Unterdruckspeicher) und somit der Gegenstand angesaugt.

Um Unebenheiten an einer Oberfläche des zu greifenden Gegenstands ausgleichen zu können, weisen die bekannten Saugköper üblicherweise eine gewisse Verformbarkeit auf, sodass sich die Dichtlippe zumindest in gewissem Maße an eine Oberflächenkontur des zu greifenden Gegenstands anpassen kann. Die Anpassbarkeit ist aber in der Regel begrenzt, sodass das Greifen unterschiedlich großer und/oder unterschiedlich geformter Gegenstände regelmäßig einen Wechsel des Saugkörpers erforderlich macht, was zu Stillstandzeiten im Prozess führen kann.

In diesem Zusammenhang schlägt beispielsweise die DE 10 2018 120 155 B4 einen Saukörper mit mehreren strahlenartig angeordneten Streben vor, zwischen denen eine flexible und luftdichte Folie angeordnet ist, welche eine Saugfläche begrenzt. Durch Ein- und Ausklappen der Streben kann eine Größe der Saugfläche verändert werden. Der Aufbau ist jedoch vergleichsweise komplex und auf das Verändern einer Größe der Saugfläche beschränkt.

Die Erfindung beschäftigt sich mit der Aufgabe, Gegenstände unterschiedlicher Beschaffenheit, insbesondere unterschiedlicher Form und Größe, sicher und kostengünstig zu greifen.

Diese Aufgabe wird erfindungsgemäß durch einen Sauggreifer mit den Merkmalen des Anspruchs 1 gelöst. Der Sauggreifer ist zum Greifen eines Gegenstands mittels Unterdruck ausgebildet. Insofern ist der Sauggreifer zum Ansaugen eines Gegenstands, bspw. eines Werkstücks, ausgebildet.

Der Sauggreifer umfasst einen, vorzugsweise einstückig, insbesondere monolithisch, ausgebildeten Elastomersaugkörper. Der Elastomersaugkörper erstreckt sich entlang einer zentralen Achse oder Hauptrichtung. Der Elastomersaugkörper weist einen Basisabschnitt (auch als Saugerhals bezeichnet) und eine, insbesondere mit dem Basisabschnitt einstückig ausgebildete, Saugkörperwandung auf. Die Saugkörperwandung erstreckt sich von dem Basisabschnitt weg. Die Saugkörperwandung begrenzt einen Saugraum (auch als Sauginnenraum oder Saugvolumen bezeichnet), welcher durch eine Saugöffnung offen ist. Der Saugraum ist insbesondere durch den Basisabschnitt mit Unterdruck beaufschlagbar. Die Saugkörperwandung begrenzt die Saugöffnung. Insbesondere weist die Saugkörperwandung an einem dem Basisabschnitt abgewandten freien Ende einen Anlageabschnitt (auch als Dichtlippe bezeichnet) zur Anlage an das zu greifende Greifobjekt auf, wobei der Anlageabschnitt die Saugöffnung umschließt. Die Saugkörperwandung umgreift die Hauptrichtung vorzugsweise vollständig. Insbesondere ist die Saugkörperwandung durchgehend, d.h. unterbrechungsfrei, ausgebildet. Die Saugkörperwandung weist insbesondere eine dem Saugraum zugewandte und diesen begrenzende Innenseite und eine dem Saugraum abgewandte Außenseite auf. Die Saugkörperwandung ist flexibel, insbesondere elastisch reversibel, verformbar ausgebildet, sodass durch Verformung der Saugkörperwandung eine Konfiguration der Saugöffnung, insbesondere deren Größe und Form, veränderbar ist. Insbesondere weist der Elastomersaugkörper im Bereich der Saugkörperwandung eine geringe Wandstärke auf als im Bereich des Basisabschnitts.

Der Sauggreifer umfasst außerdem eine Verformungseinrichtung, welche dazu ausgebildet ist, die Saugkörperwandung, insbesondere ausgehend von einer unverformten Ausgangskonfiguration, zu verformen, um eine Konfiguration der Saugöffnung, insbesondere deren Form und Größe, zu verändern. Die Verformungseinrichtung kann insbesondere dazu ausgebildet sein, die Saugkörperwandung lokal zusammenzudrücken.

Ein solcher Sauggreifer ermöglicht es Gegenstände unterschiedlicher Größe und Form auf einfache und kostengünstige Weise zu greifen. Insbesondere kann vor dem Ansaugen eines Greifobjektes eine Form der Saugöffnung an eine Geometrie des Greifobjektes angepasst werden und somit zuverlässige Abdichtung zwischen Elastomersaugkörper und Greifobjekt begünstigt werden. Durch die vorgeschlagene Ausgestaltung mit verformbarem Elastomersaugkörper und Verformungseinrichtung können insbesondere auch unregelmäßige Formen einfach abgebildet werden.

Der Elastomersaugkörper kann beispielsweise aus Polyurethan (PU) oder Nitrilkautschuk (NBR) gefertigt sein. Insbesondere ist der Elastomersaugkörper als Spritzgussteil ausgebildet. Der Elastomersaugkörper kann einen Anschlussnippel zum Anschluss an eine Unterdruckversorgung aufweisen. Der Anschlussnippel kann an dem Basisabschnitt angeordnet sein, insbesondere von dem Basisabschnitt um die Hauptrichtung umschlossen, bspw. umspritzt, sein. Der Anschlussnippel kann auch durch den Basisabschnitt gebildet sein.

### Die Saugöffnung kann in einer unverformten

Ausgangskonfiguration des Elastomersaugkörpers unterschiedlich geformt sein. Vorzugsweise ist die Saugöffnung in der Ausgangskonfiguration rotationssymmetrisch um die Hauptrichtung ausgebildet.

Vorzugsweise weitet sich der Elastomersaugkörper, insbesondere die Saugkörperwandung, in einer unverformten Ausgangskonfiguration ausgehend von dem Basisabschnitt in Richtung der Saugöffnung, insbesondere trichterförmig, auf. Insofern kann der Elastomersaugkörper insbesondere derart ausgebildet sein, dass sich ein Öffnungsquerschnitt des Saugraums im Verlauf von dem Basisabschnitt zu der Saugöffnung, vorzugsweise stetig, vergrößert.

Die Verformungseinrichtung kann an dem Elastomersaugkörper, insbesondere an dem Basisabschnitt, gehaltert sein. Alternativ kann die Verformungseinrichtung auch von dem Elastomersaugkörper separat bereitgestellt sein. Beispielsweise ist es denkbar, dass der Elastomersaugkörper und die Verformungseinrichtung an einem gemeinsamen Träger gehaltert sind.

Die Verformungseinrichtung kann dazu ausgebildet sein, die Saugkörperwandung symmetrisch in Bezug auf die Hauptrichtung zu verformen.

In vorteilhafter Weise kann die Verformungseinrichtung dazu ausgebildet sein, die Saugkörperwandung, insbesondere ausgehend von einer in Bezug auf die Hauptrichtung symmetrischen Ausgangskonfiguration, asymmetrisch zu verformen, um so insbesondere eine in ihrer Form asymmetrische Saugöffnung zu erhalten. Dies begünstig ein zuverlässiges Greifen von asymmetrisch geformten Greifobjekten, bspw. Greifobjekten mit unterschiedlich großer Ausdehnung in verschiedenen Richtungen.

Im Rahmen einer vorteilhaften Weiterbildung kann die Verformungseinrichtung dazu ausgebildet sein, die Saugkörperwandung derart zu verformen, dass die Saugöffnung in einer ersten Richtung orthogonal zur Hauptrichtung verkleinert und in einer zweiten Richtung orthogonal zur Hauptrichtung vergrößert wird. Beispielsweise kann die Verformungseinrichtung dazu ausgebildet sein, die Saugkörperwandung, insbesondere ausgehend von einer um die Hauptrichtung symmetrischen Ausgangskonfiguration, derart zu verformen, dass die Saugöffnung einen im wesentlichen ovalen Querschnitt aufweist.

Im Rahmen einer vorteilhaften Weiterbildung kann die Verformungseinrichtung wenigstens ein Verformungselement aufweisen, welches zum Verformen der Saugkörperwandung relativ zu dem Elastomersaugkörper verstellbar ist. Insbesondere kann das wenigstens eine Verformungselement gegen die Saugkörperwandung, insbesondere eine Außenseite der Saugkörperwandung, beaufschlagbar sein.

Das wenigstens eine Verformungselement kann manuell verstellbar sein. Der Sauggreifer, insbesondere die Verformungseinrichtung, kann auch eine Aktorik zum Antreiben einer Verstellbewegung des wenigstens einen Verformungselements aufweisen. Die Aktorik kann beispielsweise elektromotorisch, pneumatisch, hydraulisch oder elektromagnetisch betrieben sein.

Vorzugsweise ist das wenigstens eine Verformungselemente außerhalb des Saugraums angeordnet. Auf diese ist eine Störkontur im Saugraum minimiert, was für ein zuverlässiges Ansaugen des Greifobjektes vorteilhaft ist. Zudem ermöglicht es eine solche Ausgestaltung gegenüberliegende Abschnitte der Saugkörperwandung bis auf Kontakt zusammenzudrücken und somit den Saugraum zumindest lokal in mehrere Teilsaugräume zu unterteilen.

Insbesondere weist die Saugkörperwandung eine dem Saugraum zugewandte und diesen begrenzende Innenseite und eine dem Saugraum abgewandte Außenseite auf, wobei das wenigstens eine Verformungselemente an der Außenseite der Saugkörperwandung angreift.

Weiter kann es vorteilhaft sein, wenn das wenigstens eine Verformungselement eine Ruhekonfiguration einnehmen kann, in welcher das wenigstens eine Verformungselemente von der Saugkörperwandung beabstandet ist. Insofern kann das wenigstens eine Verformungselemente insbesondere nicht dauerhaft mit der Saugkörperwandung gekoppelt sein. Dies ermöglicht es beispielsweise, auf einfache Weise den Elastomersaugkörper, z.B. bei Verschleiß, auszutauschen.

Das wenigstens eine Verformungselement kann unterschiedlich ausgebildet sein. Das wenigstens eine Verformungselement kann plattenförmig ausgebildet sein. Das wenigstens eine Verformungselement kann stabförmig ausgebildet sein. Das wenigstens eine Verformungselement kann ein- oder mehrstückig ausgebildet sein.

Das wenigstens eine Verformungselement kann starr oder elastisch ausgebildet sein. Im Rahmen einer vorteilhaften Ausgestaltung kann das wenigstens eine Verformungselement eine Erstreckung in Hauptrichtung aufweisen, wobei das wenigstens eine Verformungselement im Verlauf seiner Erstreckung in Hauptrichtung eine unterschiedliche Elastizität aufweist, insbesondere in Hauptrichtung eine Elastizität des Verformungselements zunimmt.

Wie vorstehend beschrieben, ist das wenigstens eine Verformungselement insbesondere relativ zu dem Elastomersaugkörper verstellbar ausgebildet. Das wenigstens eine Verformungselement kann in einer zu der Hauptrichtung parallelen ersten Richtung relativ zu dem Elastomersaugkörper verstellbar sein. Alternativ oder zusätzlich kann das wenigstens eine Verformungselement in einer zu der Hauptrichtung geneigten, insbesondere orthogonalen, zweiten Richtung relativ zu dem Elastomersaugkörper verstellbar sein. Alternativ oder zusätzlich kann das wenigstens eine Verformungselement um eine zu der Hauptrichtung orthogonalen dritten Richtung drehbar- oder verkippbar ausgebildet sein.

Im Rahmen einer besonders vorteilhaften Weiterbildung kann die Verformungseinrichtung zwei an gegenüberliegenden Seiten des Elastomersaugkörpers angeordnete Verformungselemente aufweisen. Die zwei Verformungselemente können insbesondere dazu ausgebildet sein, an gegenüberliegenden Außenseiten der Saugkörperwandung anzugreifen. Dies ermöglicht es beispielsweise die Saugkörperwandung lokal zusammenzudrücken und somit eine Konfiguration der Saugöffnung zu verändern.

Die beiden Verformungselemente können als separate Bauteile bereitgestellt sein. Die beiden Verformungselemente können auch durch Abschnitte eines übergeordneten Verformungsteils bereitgestellt sein.

Die beiden Verformungselemente können in festem Abstand zueinander angeordnet sein.

Im Rahmen einer vorteilhaften Ausgestaltung kann ein Abstand der Verformungselemente in einer zu der Hauptrichtung orthogonalen (zweiten) Richtung geringer sein als ein Außendurchmesser des Elastomersaugkörpers, insbesondere der Saugkörperwandung, im Bereich der Saugöffnung in der Ausgangskonfiguration des Elastomersaugkörpers. Insbesondere ist ein Abstand der Verformungselemente in einer zu der Hauptrichtung orthogonalen (zweiten) Richtung geringer als ein Durchmesser der Saugöffnung in deren Ausgangskonfiguration. Bei einer solchen Ausgestaltung kann es vorteilhaft sein, wenn die Verformungselemente in einer zu der Hauptrichtung parallelen (ersten) Richtung (gemeinsam oder voneinander unabhängig) verstellbar sind. Durch Verstellen der Verformungselemente entlang der ersten Richtung kann insofern die Saugkörperwandung verformt, insbesondere zusammengedrückt, werden und so eine Konfiguration der Saugöffnung verändert werden.

Die beiden Verformungselemente können auch relativ zueinander verstellbar sein.

Im Rahmen einer vorteilhaften Ausgestaltung kann ein Abstand der Verformungselemente in einer zu der Hauptrichtung orthogonalen (zweiten) Richtung verstellbar sein, insbesondere um die Saugkörperwandung zu verformen, insbesondere zumindest lokal zusammenzudrücken.

Im Rahmen einer weiteren vorteilhaften Ausgestaltung können die Verformungselemente in einer zur Hauptrichtung parallelen (ersten) Richtung und in einer zur Hauptrichtung geneigten, insbesondere orthogonalen, (zweiten) Richtung relativ zu dem Elastomersaugkörper, insbesondere voneinander unabhängig, verstellbar sein. Dies ermöglicht es beispielsweise zunächst die Verformungselemente auf eine bestimmte Verformungsposition (Höhe) entlang der Hauptrichtung zu positionieren (bspw. in einem oberen oder unteren Drittel der Saugkörperwandung entlang deren Erstreckung von dem Basisabschnitt zu der Saugöffnung), und dann die Saugkörperwandung orthogonal zur Hauptrichtung zusammenzudrücken. Auf diese Weise kann eine Form der Saugöffnung besonders flexibel eingestellt werden.

Die Verformungselemente können an einem Träger gehaltert sein, insbesondere derart, dass die Verformungselemente den Elastomersaugkörper, insbesondere die Saugkörperwandung, klammerartig umgreifen. Die Verformungselemente können über ein sich orthogonal zu der Hauptrichtung erstreckendes Verbindungselement, insbesondere Verbindungsplatte, miteinander verbunden sein.

Die Verformungselemente können durch Abschnitte eines U-förmigen oder im Wesentlichen U-förmigen Verformungsteils gebildet sein, welches den Elastomersaugkörper umgreift.

Im Rahmen einer weiteren vorteilhaften Ausgestaltung kann die Verformungseinrichtung ein, insbesondere plattenförmiges, Verformungsteil aufweisen, welches den Elastomersaugkörper vorzugsweise zumindest abschnittsweise um die Hauptrichtung umgreift. Das Verformungsteil weist vorzugsweise eine Aussparung, insbesondere Durchgangsöffnung, auf, in welche der Elastomersaugkörper einführbar ist. Die Aussparung, insbesondere Öffnung, weist in zumindest einer Richtung eine geringere Öffnungsbreite als die Saugöffnung in deren Ausgangskonfiguration auf. Das Verformungsteil ist insbesondere entlang einer zu der Hauptrichtung parallelen (ersten) Richtung relativ zu dem Elastomersaugkörper verstellbar, sodass durch Zusammenwirken der Saugkörperwandung mit die Aussparung, insbesondere die Durchgangsöffnung, begrenzenden Wänden des Verformungsteils (bilden insofern Verformungselemente) die Saugkörperwandung verformt wird.

Die Aussparung (Öffnung) kann symmetrisch ausgebildet sein, bspw. rund. Beispielswiese kann das Verformungselement ringförmig ausgebildet sein. Die Aussparung (Öffnung) kann auch asymmetrisch ausgebildet sein. Beispielsweise kann die Aussparung als Langloch ausgebildet sein.

Im Rahmen einer weiteren vorteilhaften Ausgestaltung kann das wenigstens eine Verformungselement mit dem Elastomersaugkörper, insbesondere der Saugkörperwandung, bewegungsgekoppelt, insbesondere fest verbunden sein. Eine Deformation der Saugkörperwandung kann dann beispielsweise durch Verkippen des wenigstens einen Verformungselements um eine zu der Hauptrichtung orthogonale Kipprichtung bewirkt werden. Eine mögliche Realisierungsform sieht vor, dass das wenigstens eine Verformungselement als Tasche ausgebildet ist, in welche ein Betätigungselement (Kopplungselement) zur Ausübung einer Kippbewegung auf das Verformungselement einsetzbar ist. Insbesondere können mehrere solcher mit dem Elastomersaugkörper fest verbundenen Verformungselemente vorgesehen sein, welche insbesondere um die Hauptrichtung verteilt sind.

Im Rahmen einer weiteren vorteilhaften Ausgestaltung kann die Verformungseinrichtung dazu ausgebildet sein, die Saugkörperwandung derart zu verformen, insbesondere einen die Saugöffnung begrenzenden Anlageabschnitt (Dichtlippe) der Saugkörperwandung derart lokal zusammenzudrücken, dass die Saugöffnung in wenigstens zwei Teilsaugöffnungen unterteilt wird. Dies ermöglicht es beispielsweise Stückgüter mit im Vergleich zu der unverformten Saugöffnung geringer Abmessung zuverlässig zu greifen (solche Stückgüter könnten im unverformten Zustand in der Regel nicht hinreichend abgedichtet werden). Eine möglich Realisierungsform sieht vor, dass die Verformungseinrichtung wenigstens zwei voneinander unabhängig verstellbare Verformungselemente aufweist, welche an unterschiedlichen Positionen der Saugkörperwandung angreifen und insbesondere derart ausgebildet und angeordnet sind, um die Saugkörperwandung aus verschiedenen Richtungen zu verformen.

In vorteilhafter Weise kann eine Steuereinrichtung zum Ansteuern der Verformungseinrichtung, insbesondere der optionalen Aktorik zum Verstellen des wenigstens einen Verformungselementes, vorgesehen sein. Die Steuereinrichtung kann Teil des Sauggreifers sein. Die Steuereinrichtung kann auch Teil einer übergeordneten Steuereinrichtung sein, bspw. einer Steuereinrichtung einer Handhabungsanlage, in welche der Sauggreifer eingebaut ist. Die Steuereinrichtung kann dazu eingerichtet sein, die Verformungseinrichtung in Abhängigkeit von Geometrie-Informationen, insbesondere Geometrie-Daten, zu dem zu greifenden Greifobjekt anzusteuern.

Die vorstehend genannte Aufgabe wird auch durch Verfahren zum Greifen eines Gegenstands mittels eines vorstehend beschriebenen Sauggreifers gelöst. Die vorstehend im Zusammenhang mit dem Sauggreifer als solchen beschriebenen Vorteile und Merkmale können auch zur Ausgestaltung der Verfahren dienen, sodass auf vorstehende Offenbarung hierzu verwiesen wird.

Das Verfahren umfasst zunächst das Bereitstellen eines zu greifenden Greifobjektes sowie das Bereitstellen eines vorstehend beschriebenen Sauggreifers. Gemäß dem Verändern wird vor dem Greifen des Greifobjektes, insbesondere bevor das Greifobjekt überhaupt von dem Sauggreifer kontaktiert wird, eine Konfiguration der Saugöffnung durch Verformen der Saugkörperwandung mittels der Verformungseinrichtung verändert, insbesondere in Abhängigkeit einer Geometrie des Greifobjektes. Erst danach wird der Elastomersaugkörper auf das Greifobjekt (mit der Saugöffnung) aufgesetzt und das Greifobjekt, insbesondere durch Beaufschlagen des Saugraums mit Unterdruck, angesaugt.

Insofern wird vor dem eigentlichen Greifvorgang der Elastomersaugkörper, insbesondere die Saugöffnung, "vorgeformt". Auf diese Weise wird eine zuverlässige Abdichtung zwischen Elastomersaugkörper, insbesondere Dichtlippe, und Greifobjekt - und somit ein zuverlässiges Greifen des Greifobjektes - begünstigt.

Das Verformen der Saugkörperwandung erfolgt vorzugsweise in Abhängigkeit einer Geometrie des zu greifenden Greifobjektes. Beispielsweise ist es denkbar, dass zunächst Geometrie-Informationen bereitgestellt werden. Insbesondere können Geometrie-Daten auf einer nicht-flüchtigen Speichereinrichtung einer Steuereinrichtung (siehe oben) bereitgestellt werden und in Abhängigkeit dieser Geometrie-Daten die Verformungseinrichtung angesteuert werden.

Im Rahmen einer vorteilhaften Weiterbildung können die Geometrie-Informationen vor dem Verändern der Konfiguration der Saugöffnung ermittelt werden. Beispielsweise ist es denkbar, dass eine Geometrie, insbesondere eine äußere Gestalt oder Außenkontur, eines zu greifenden Greifobjektes mittels einer Erfassungseinrichtung, insbesondere umfassend wenigstens eine Kamera, erfasst wird. Das Verformen der Saugkörperwandung kann dann in Abhängigkeit der erfassten Geometrie erfolgen.

Es ist auch denkbar, dass vor dem Verändern der Konfiguration der Saugöffnung das zu greifende Greifobjekte oder zumindest der Typ des Greifobjektes mittels einer Identifizierungseinrichtung identifiziert wird. Eine Ansteuerung der Verformungseinrichtung kann dann beispielsweise in Abhängigkeit von Informationen, insbesondere Geometrie-Informationen, angesteuert werden, welche zu dem identifizierten Greifobjekt oder Greifobjekt-Typ in einer Datenbank, bspw. in einer nicht-flüchtigen Speichereinrichtung einer Steuereinrichtung, hinterlegt sind. Beispielsweise ist es denkbar, dass nach dem Identifizieren des Greifobjektes Geometrie-Daten zu diesem Greifobjekt bereitgestellt oder ausgelesen werden, anhand derer die Verformungseinrichtung dann angesteuert wird.

Die Identifizierungseinrichtung kann beispielsweise ein Barcode-Scanner sein, welcher dazu ausgebildet ist, ein auf einem Greifobjekt angeordneten Barcode zu identifizieren.

Im Rahmen einer vorteilhaften Ausgestaltung kann das wenigstens eine Verformungselement in einer zu der Hauptrichtung parallelen ersten Richtung und in einer zur Hauptrichtung geneigten, insbesondere orthogonalen, zweiten Richtung relativ zu dem Elastomersaugkörper verstellbar sein, wobei zum Verformen der Saugkörperwandung das wenigstens eine Verformungselement zunächst entlang der ersten Richtung relativ zu dem Elastomersaugkörper positioniert wird (insbesondere ohne, dass es hierbei zu einer Verformung der Saugkörperwandung kommt), und sodann in der zweiten Richtung relativ zu dem Elastomersaugkörper verlagert wird, um die Saugkörperwandung zu verformen, insbesondere zusammenzudrücken.

Die vorstehend genannte Aufgabe wird auch durch eine Handhabungsanlage, umfassend einen vorstehend beschriebenen Sauggreifer und einen Manipulator, insbesondere Roboter, zum Verlagern des Sauggreifers, gelöst. Die vorstehend im Zusammenhang mit dem Sauggreifer als solchen beschriebenen Vorteile und Merkmale können auch zur Ausgestaltung der Handhabungsanlage dienen, sodass auf vorstehende Offenbarung hierzu verwiesen wird.

Vorzugsweise umfasst die Handhabungsanlage außerdem eine Steuereinrichtung zum Ansteuern der Verformungseinrichtung des Sauggreifers und des Manipulators. Es ist auch denkbar, dass der Sauggreifer eine Sub-Steuerung zur Ansteuerung der Verformungseinrichtung aufweist, welche mit der Steuereinrichtung der Handhabungsanlage zusammenwirkt. Die Steuereinrichtung ist insbesondere dazu eingerichtet, eines der vorstehend beschriebenen Verfahren durchzuführen. Insbesondere weist die Steuereinrichtung eine nicht-flüchtige Datenspeichereinrichtung auf, auf welcher Steuereinweisungen hinterlegt, insbesondere gespeichert, sind, welche, insbesondere bei Ausführung durch eine Datenverarbeitungsanlage der Steuereinrichtung, die Steuereinrichtung dazu veranlassen, eines der vorstehend beschriebenen Verfahren durchzuführen.

Die Handhabungsanlage kann außerdem eine vorstehend erwähnte Erfassungseinrichtung zum Erfassen einer Geometrie eines zu greifenden Greifobjektes aufweisen. Beispielsweise kann die Erfassungseinrichtung eine oder mehrere Kameras aufweisen.

Die Handhabungsanlage kann außerdem eine vorstehend erwähnte Identifizierungseinrichtung zur Identifizierung eines zu greifenden Greifobjektes umfassen. Beispielsweise kann es sich bei der Identifizierungseinrichtung um einen Barcode-Leser bzw. Barcode-Scanner handeln.

Die Handhabungsanlage kann außerdem eine mit einem Unterdruckanschluss des Sauggreifers, insbesondere mit dem Saugraum strömungsverbundene Unterdruckerzeugungseinrichtung zur Erzeugung von Unterdruck aufweisen.

Die Erfindung wird im Folgenden anhand der Figuren näher erläutert.

Es zeigen:
Fig. 1 eine vereinfachte schematische Darstellung einer ersten beispielhaften Ausgestaltung eines Sauggreifers in einer teilweisen Schnittansicht;
**Fig.** 2 vereinfachte schematische Darstellungen zur Erläuterung einer Funktionsweise der Verformungseinrichtung des Sauggreifers gemäß Figur 1;
Fig. 3 bis 10 vereinfachte schematische Darstellungen weiterer beispielhafter Ausgestaltungen eines Sauggreifers in verschiedenen Funktionsstellungen;
**Fig.** 11 vereinfachte schematische Darstellungen zur Erläuterung einer beispielhaften Anwendungssituation eines Sauggreifers gemäß Figur 10;
Fig. 12 vereinfachte schematische Darstellung einer beispielhaften Ausgestaltung einer Handhabungsanlage umfassend einen Sauggreifer gemäß Figur 1; und
Fig. 13 vereinfachte schematische Darstellung einer weiteren beispielhaften Ausgestaltung einer Handhabungsanlage umfassend einen Sauggreifer gemäß Figur 1.

In der nachfolgenden Beschreibung sowie in den Figuren sind für identische oder einander entsprechende Merkmale jeweils dieselben Bezugszeichen verwendet.

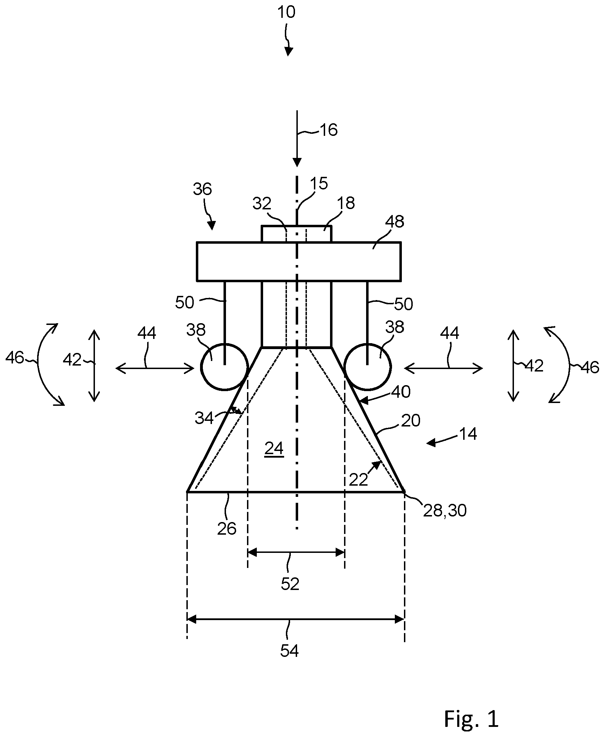

Die Figur 1 zeigt in vereinfachter schematischer Seitenansicht eine beispielhafte Ausgestaltung eines Sauggreifers, welcher insgesamt mit dem Bezugszeichen 10 bezeichnet ist. Der Sauggreifer 10 ist zum Ansaugen und somit Greifen eines Greifobjektes 12 (in Figur 1 nicht dargestellt) ausgebildet.

Der Sauggreifer 10 weist einen Elastomersaugkörper 14 auf. Der Elastomersaugkörper 14 erstreckt sich im Beispiel entlang einer zentralen Achse 15. Der Elastomersaugkörper 14 weist einen Basisabschnitt 18 und eine sich von dem Basisabschnitt 18 weg erstreckende Saugkörperwandung 20 auf. Eine Hauptrichtung 16 verläuft dabei entlang der zentralen Achse 15 und weist von dem Basisabschnitt 18 in Richtung zu der Saugkörperwandung 20. Der Basisabschnitt 18 und die Saugkörperwandung 20 sind vorzugsweise einstückig, insbesondere monolithisch, ausgebildet. Beispielhaft kann es sich bei dem Elastomersaugkörper 14 um ein Spritzgussteil handeln.

Wie aus Figur 1 ersichtlich, begrenzt die Saugkörperwandung 20 mit ihrer Innenseite 22 einen Saugraum 24. Die Saugkörperwandung 20 umgreift dabei die Hauptrichtung 16 vorzugweise vollständig. Der Saugraum 24 weist eine Saugöffnung 26 auf, welche durch einen Anlageabschnitt 28 der Saugkörperwandung 20 begrenzt ist. Der Anlageabschnitt 28 dient zur Anlage an das Greifobjekt 12 und bildet insofern eine Dichtlippe 30.

Der Basisabschnitt 18 ist insbesondere zum Anschluss an eine externe Unterdruckversorgung (nicht dargestellt) ausgebildet. Wie in Figur 1 beispielhaft angedeutet, weist der Basisabschnitt 18 einen innenliegenden Kanal 32 auf, über welchen der Saugraum 24 mit Unterdruck versorgbar ist.

Beispielhaft und bevorzugt weitet sich die Saugkörperwandung 20 in Richtung der Saugöffnung 26 (in Hauptrichtung 16) trichterförmig auf. Insofern vergrößert sich ein Öffnungsquerschnitt des Saugraums 24 im Verlauf von dem Basisabschnitt 18 zu dem Anlageabschnitt 28. Beispielhaft erstreckt sich die Saugkörperwandung 20 rotationssymmetrisch, insbesondere konusförmig, um die Hauptrichtung 16. Bei nicht dargestellten Ausführungsformen ist es jedoch auch möglich, dass sich die Saugkörperwandung 20 nicht rotationssymmetrisch um die Hauptrichtung 16 erstreckt.

Wie in Figur 1 durch die Strichlinien angedeutet, ist die Saugkörperwandung 20 im Beispiel derart ausgebildet, dass sich eine Wandungsstärke 34 (Materialdicke) der Saugkörperwandung 20 entlang ihres Verlaufs in Richtung von dem Basisabschnitt 18 zu der Saugöffnung 26, also in Hauptrichtung 16, verringert. Beispielhaft und bevorzugt verringert sich eine Materialdicke krümmungsfrei, insbesondere linear. Insofern ist eine Wandungsstärke 34 im Bereich des Anlageabschnitts 28 vergleichsweise gering, während eine Wandungsstärke 34 (Materialdicke) in einem zu dem Basisabschnitt 18 benachbarten Wandungsabschnitt vergleichsweise dick ist. Bei nicht dargestellten Ausgestaltungen kann die Saugkörperwandung 20 aber auch andere Wandungsstärken 34 aufweisen.

Der Sauggreifer 10 umfasst außerdem eine Verformungseinrichtung 36, welche dazu ausgebildet ist, die Saugkörperwandung 20 zu verformen und somit eine Konfiguration der Saugöffnung 26, insbesondere deren Form, zu verändern (nachfolgend im Detail erläutert).

Bei der Ausgestaltung gemäß Figur 1 umfasst die Verformungseinrichtung 36 zwei Verformungselemente 38, welche auf gegenüberliegenden Seiten des Elastomersaugkörpers 14 angeordnet sind. Bei anderen Ausgestaltungen (siehe unten) kann die Verformungseinrichtung 36 aber auch mehr oder weniger Verformungselemente 38 aufweisen.

Die Verformungselemente 38 sind außerhalb des Saugraums 24 angeordnet und dazu ausgebildet, an einer Außenseite 40 der Saugkörperwandung 20 anzugreifen.

Die Verformungselemente 38 sind relativ zu dem Elastomersaugkörper 14 verstellbar angeordnet. Wie in Figur 1 beispielhaft dargestellt ist es - je nach Ausgestaltung - beispielsweise möglich, dass die Verformungselemente 38 entlang einer zu der Hauptrichtung 16 parallelen ersten Richtung (in Figur 1 durch den Doppelpfeil 42 angedeutet) verstellbar sind. Alternativ oder zusätzlich ist es auch möglich, dass die Verformungselemente 38 in einer zu der Hauptrichtung 16 orthogonalen zweiten Richtung (in Figur 1 durch den Doppelpfeil 44 angedeutet) verstellbar sind. Alternativ oder zusätzlich ist es auch denkbar, dass die Verformungselemente 38 um eine dritte Richtung drehbar und/oder verkippbar sind (in Figur 1 durch den Doppelpfeil 46 angedeutet).

Wie vorstehend erwähnt, umfasst der Sauggreifer 10 vorzugweise eine Aktorik 48 (in Figur 1 lediglich schematisch angedeutet), um eine Verstellbewegung der Verformungselemente 38 relativ zu dem Elastomersaugkörper 14 anzutreiben. Die Aktorik 48 kann beispielsweise elektromotorisch, pneumatisch, hydraulisch oder elektromagnetisch betrieben sein.

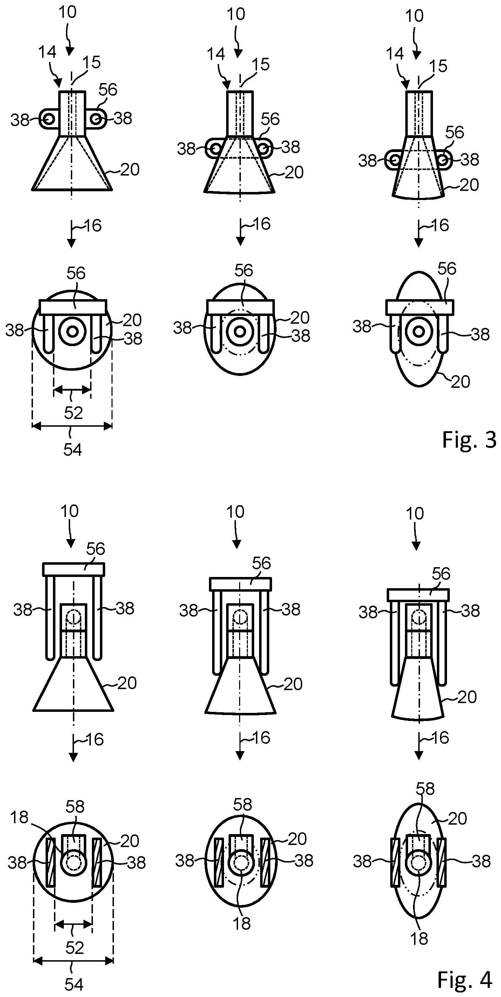

Im Beispiel gemäß Figur 1 sind die Verformungselemente 38 beispielhaft über entsprechende Halterungen 50 mit der Aktorik 48 verbunden sind. Wie nachfolgend in Bezug auf die Figuren 3 ff. erläutert, können die Verformungselemente 38 aber auch andere Konfiguration einnehmen.

Bei der Ausgestaltung gemäß Figur 1 ist ein Abstand 52 der Verformungselemente 38 zueinander entlang der zweiten Richtung 44 kleiner als ein Durchmesser 54 der Saugöffnung 26 in deren (unverformten) Ausgangskonfiguration, sodass eine Verlagerung der Verformungselemente 38 in Hauptrichtung 16 dazu führt, dass die Saugkörperwandung 20 durch die Verformungselemente 38 zusammengedrückt wird (siehe unten).

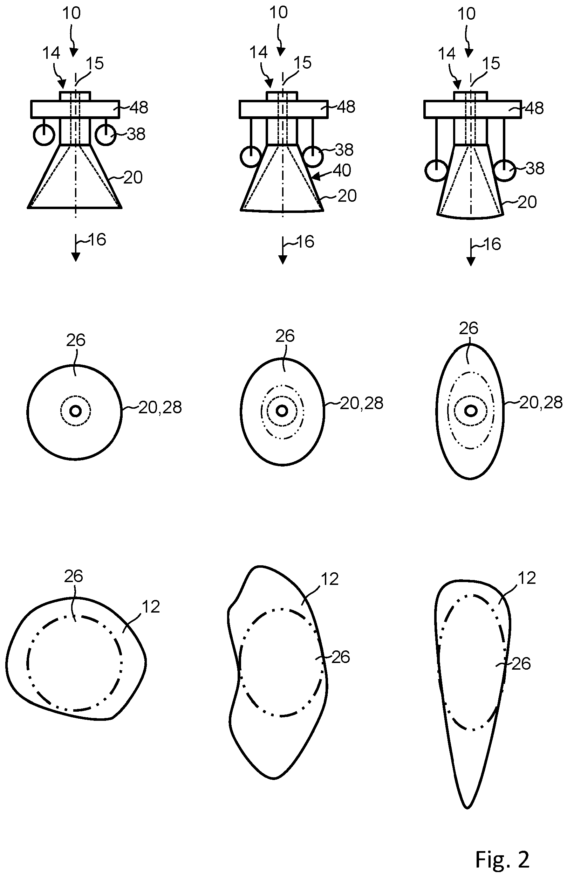

Eine beispielhafte Anwendungssituation des Sauggreifers 10 gemäß Figur 1 wird nachfolgend unter Bezugnahme auf die Figur 2 erläutert, welche in den Spalten unterschiedliche Funktionszustände des Sauggreifers 10 zeigt. In der ersten Zeile ist der Sauggreifer 10 dabei immer in einer Seitenansicht gemäß Figur 1 gezeigt, in der zweiten Zeile ist eine schematische Darstellung der Konfiguration der Saugöffnung 26 gezeigt und in der dritten Zeile ist eine beispielhafte Wechselwirkung mit einem Greifobjekt 12 gezeigt.

In der ersten Spalte ist der Sauggreifer 10 in einer Ausgangskonfiguration gezeigt, in welcher sich die Verformungselemente 38 in einer von der Saugkörperwandung 20 beabstandeten Ruhekonfiguration befinden. Wie aus Zeile 2 ersichtlich, ist die Saugöffnung 26 in der Ausgangskonfiguration im Beispiel rotationssymmetrisch (rund) um die Hauptachse 16 ausgebildet.

In der zweiten Spalte ist der Sauggreifer 10 in einer ersten Verformungskonfiguration gezeigt, in welcher im Vergleich zur Ausgangskonfiguration die Verformungselemente 38 in Hauptrichtung 16 (erster Richtung 42) verlagert sind, sodass diese an der Außenseite 40 der Saugkörperwandung 20 anliegen und die Saugkörperwandung 20 leicht zusammendrücken. Wie aus Zeile 2 ersichtlich, führt dies zu einer Deformation der Saugöffnung 26, welche nun eine leicht ovale Form einnimmt.

Eine solche Konfiguration der Saugöffnung 26 kann beispielsweise geeignet sein, um längliche Greifobjekte 12 zu greifen (vgl. Spalte 2, letzte Zeile). Wie vorstehend beschrieben, erfolgt eine Verformung des Elastomersaugkörpers 14 insbesondere bevor der Elastomersaugkörper 14 auf das Greifobjekt 12 aufgesetzt wird.

In der dritten Spalte ist der Sauggreifer 10 in einer zweiten Verformungskonfiguration gezeigt, in welcher im Vergleich zur ersten Verformungskonfiguration die Verformungselemente 38 noch weiter in Hauptrichtung 16 (erster Richtung 42) verlagert sind, sodass die Saugkörperwandung 20 noch weiter zusammengedrückt ist. Wie aus Zeile 2 ersichtlich, führt eine solche Deformation der Saugkörperwandung 20 zu einer noch ovaleren Saugöffnung 26, welche nun deutlich asymmetrisch geformt ist mit einer langen Achse und einer kurzen Achse. Eine solche Konfiguration der Saugöffnung 26 kann beispielsweise geeignet sein, um noch länglichere Greifobjekte 12 zu greifen (vgl. Spalte 3, letzte Zeile).

Die Figuren 3 bis 8 zeigen weitere beispielhafte Ausgestaltungen eines Sauggreifers 10 mit Verformungseinrichtung 36, wobei gleiche Bezugszeichen gleiche oder entsprechende Bauteile bezeichnen. Die Ausgestaltungen gemäß Figuren 3 bis 6 weisen beispielhaft den gleichen Elastomersaugkörper 14 wie die Ausgestaltung gemäß Figur 1 auf, sodass zur Vermeidung von Wiederholen auf vorstehende Offenbarung hierzu verwiesen wird und nachfolgend nur die Unterschiede in der Ausgestaltung der Verformungseinrichtung 36 beschrieben werden.

Analog zu Figur 2 zeigen die Figuren 3 bis 8 in den verschiedenen Spalten unterschiedliche Funktionszustände der Verformungseinrichtung 36, wobei die obere Zeile die Sauggreifer 10 in Seitenansicht und die untere Zeile die Sauggreifer 10 in Draufsicht (teilweise geschnitten) zeigt.

Figur 3 zeigt eine beispielhafte Ausgestaltung eines Sauggreifers 10, bei welcher die Verformungselemente 38 stabförmig ausgebildet sind und über ein Verbindungselement 56 (oder auch Träger) in festem Abstand zueinander angeordnet sind. Wie zu Figur 1 erläutert, ist der Abstand 52 der Verformungselemente 38 zueinander kleiner als ein Durchmesser 54 der Saugöffnung 26 in deren Ausgangskonfiguration (vgl. linke Spalte). Das Verbindungelement 56 und somit die Verformungselemente 38 sind entlang der Hauptrichtung 16 (erste Richtung 42) verlagerbar (manuell oder durch eine entsprechende Aktorik (nicht dargestellt)), sodass bei Erreichen einer bestimmten Position entlang der Hauptrichtung 16 die Verformungselemente 38 die Außenseite 40 der Saugkörperwandung 20 berühren und bei weiterer Verlagerung die Saugkörperwandung 20 verformen. Analog zu Figur 2 zeigt auch Figur 3 in der zweiten und dritten Spalte zwei Verformungskonfigurationen, die sich in der Position der Verformungselemente 38 entlang der Hauptrichtung 16 und somit in einem Verformungsgrad der Saugkörperwandung 20 unterscheiden.

Figur 4 zeigt eine weitere beispielhafte Ausgestaltung eines Sauggreifers 10, bei welcher die Verformungselemente 38 plattenförmig ausgebildet sind. Beispielhaft sind die Verformungselemente 38 über ein Verbindungselement 56 in festem Abstand 52 zueinander angeordnet. Das Verbindungselement 56 erstreckt sich beispielhaft orthogonal zur Hauptrichtung 16 und überspannt den Basisabschnitt 18. Wie in Figur 4, untere Zeile ersichtlich, kann es bei einer solchen Ausgestaltung vorteilhaft sein, wenn der Basisabschnitt 18 einen seitlichen Unterdruckanschluss 58 aufweist. Analog zu der Ausgestaltung gemäß Figur 3 ist ein Abstand 52 der Verformungselemente 38 in der zweiten Richtung 44 (orthogonal zur Hauptrichtung 16) kleiner als ein Durchmesser 54 der Saugöffnung 26 in deren Ausgangskonfiguration, sodass durch Verlagerung der Verformungselemente 38 entlang der Hauptrichtung 16 die Saugkörperwandung 20 verformbar und somit eine Form der Saugöffnung 26 veränderbar ist (vgl. Spalten).

Wie vorstehend erwähnt, können die plattenförmigen Verformungselemente 38 starr oder elastisch ausgebildet sein. Die Verformungselemente 38 können gleichmäßige Eigenschaften oder örtlich unterschiedliche Eigenschaften aufweisen. Beispielsweise können die Verformungselemente 28 derart ausgebildet sein, dass eine Elastizität entlang der Hauptrichtung 16 zunimmt.

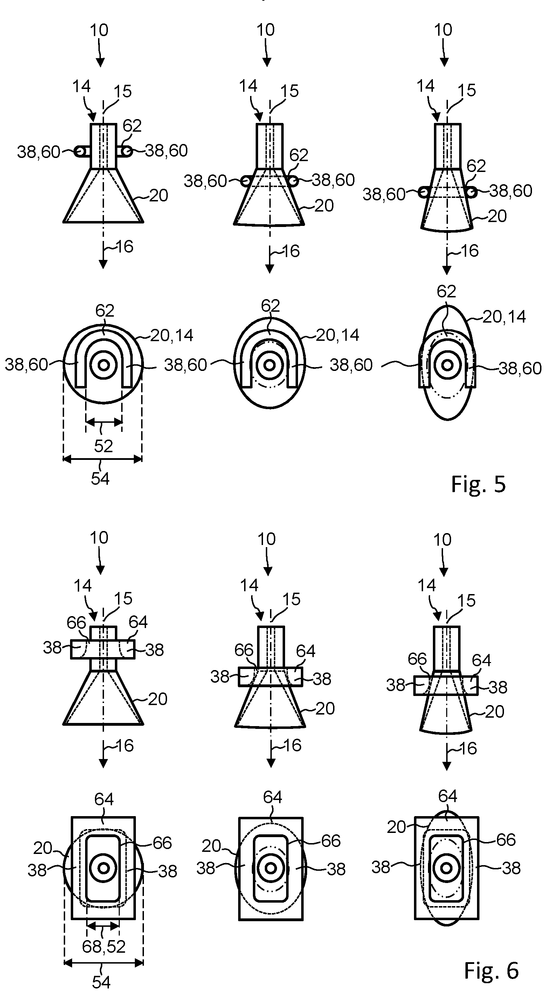

Figur 5 zeigt eine weitere beispielhafte Ausgestaltung eines Sauggreifers 10, bei welcher die Verformungselemente 38 durch die Schenkel 60 eines U-förmigen Verformungsteils 62 (bspw. U-förmiger Stab) gebildet sind. Ein Abstand 52 zwischen den Schenkeln 60 in zweiter Richtung 44 (orthogonal zur Hauptrichtung 16) ist dabei wieder kleiner bemessen als ein Durchmesser 54 der Saugöffnung 26 in deren Ausgangskonfiguration, sodass durch Verlagerung der Verformungselemente 38 entlang der Hauptrichtung 16 die Saugkörperwandung 20 verformbar und somit eine Form der Saugöffnung 26 veränderbar ist.

Figur 6 zeigt eine weitere beispielhafte Ausgestaltung eines Sauggreifers 10, bei welcher die Verformungselemente 38 durch Abschnitte eines plattenförmigen Verformungsteil 64 gebildet sind. Das Verformungsteil 64 weist eine Öffnung 66 auf, in welche der Elastomersaugkörper 14 einführbar ist. Im Beispiel ist die Öffnung 66 asymmetrisch ausgebildet mit einer kurzen Achse und einer langen Achse. Eine Öffnungsbreite 68 entlang der kurzen Achse (und somit ein Abstand 52 der die Verformungselemente 38 bildenden Abschnitte) ist wieder kleiner bemessen als ein Durchmesser 54 der Saugöffnung 26 in deren Ausgangskonfiguration, sodass durch Verlagerung der des Verformungsteils 64 entlang der Hauptrichtung 16 die Saugkörperwandung 20 verformbar und somit eine Form der Saugöffnung 26 veränderbar ist (vgl. Spalten gemäß Figur 6).

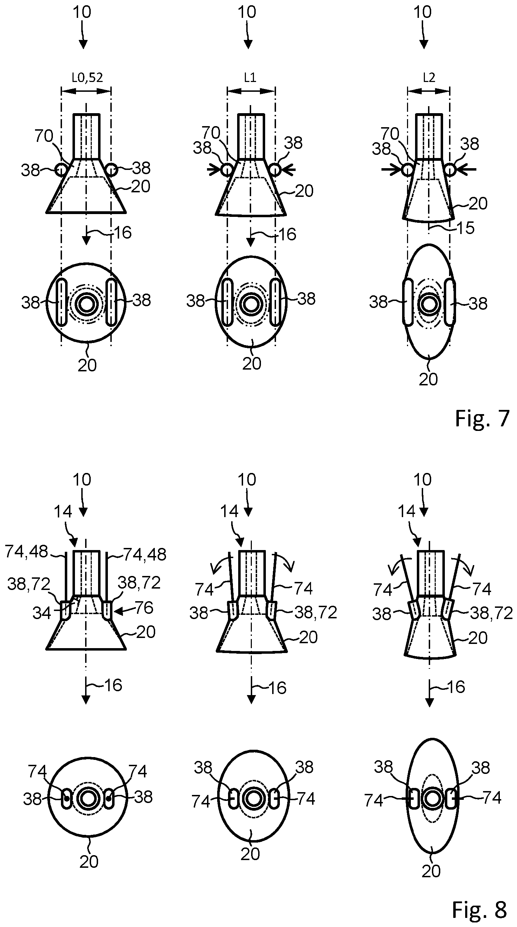

Figur 7 zeigt eine weitere beispielhafte Ausgestaltung eines Sauggreifers 10, bei welcher die Verformungseinrichtung 36 zwei Verformungselemente 38 aufweist, welche orthogonal zur Hauptrichtung 16 (in zweiter Richtung 44) relativ zueinander und relativ zu dem Elastomersaugkörper 14 verstellbar sind. Die Verformungselemente 38 können optional zusätzlich entlang der Hauptrichtung 16 relativ zu dem Elastomersaugkörper 14 verstellbar sein. Die linke Spalte zeigt den Sauggreifer 10 wieder in einer Ausgangskonfiguration, in welcher die Verformungselemente 38 keine Kraft auf die Saugkörperwandung 20 ausüben, sodass - im Beispiel - die Saugöffnung rotationssymmetrisch ausgebildet ist. Die mittlere Spalte zeigt den Sauggreifer 10 in einer ersten Verformungskonfiguration, in welcher ein Abstand L1 der Verformungselemente 38 zueinander im Vergleich zu dem Abstand L0 der Verformungselemente 28 in der Ausgangskonfiguration verringert ist und somit die Saugkörperwandung 20 leicht zusammengedrückt ist. Wie aus Zeile 2 ersichtlich, nimmt die Saugöffnung 26 in dieser Verformungskonfiguration eine leicht ovale Form ein. Die dritte Spalte zeigt eine zweite Verformungskonfiguration, in welcher ein Abstand L2 der Verformungselemente 38 zueinander im Vergleich zu dem Abstand L1 der Verformungselemente 28 in der ersten Verformungskonfiguration weiter verringert ist und somit die Saugkörperwandung 20 noch weiter zusammengedrückt ist. Dies hat zur Folge, dass die Saugöffnung 26 eine noch ovalere, asymmetrische Form einnimmt.

Wie in Figur 7 beispielhaft dargestellt kann die Saugkörperwandung 20 optional in einem Anlagebereich 70 für die Verformungselemente 38 eine Versteifung in Form einer lokal größeren Wandstärke aufweisen.

Figur 8 zeigt eine weitere beispielhafte Ausgestaltung eines Sauggreifers 10, bei welcher die Verformungseinrichtung 36 zwei mit der Saugkörperwandung 20 fest verbundene, insbesondere einstückig ausgebildete, Verformungselemente 38 aufweist, welche über eine Aktorik 48 verstellbar sind. Im konkreten Beispiel sind die Verformungselemente 38 als Taschen 72 ausgebildet, in die entsprechende, z.B. stabförmige, Betätigungselemente 74 (Kopplungselemente) einsteckbar sind. Die Betätigungselemente 74 können auch mit den Verformungselementen 38 einstückig ausgebildet sein. Wie in Figur 8 schematisch dargestellt, kann durch Verkippen der Betätigungselemente 74 die Saugkörperwandung 20 verformt und somit eine Form der Saugöffnung 26 verändert werden.

Im Beispiel gemäß Figur 8 sind die Verformungselemente 38 in einem zu dem Basisabschnitt 18 benachbarten Wandungsabschnitt 76 der Saugkörperwandung 20 angeordnet. Beispielhaft weist die Saugkörperwandung 20 in diesem Bereich 76 eine Versteifung in Form einer vergrößerten Wandstärke 34 auf (ähnlich Figur 7).

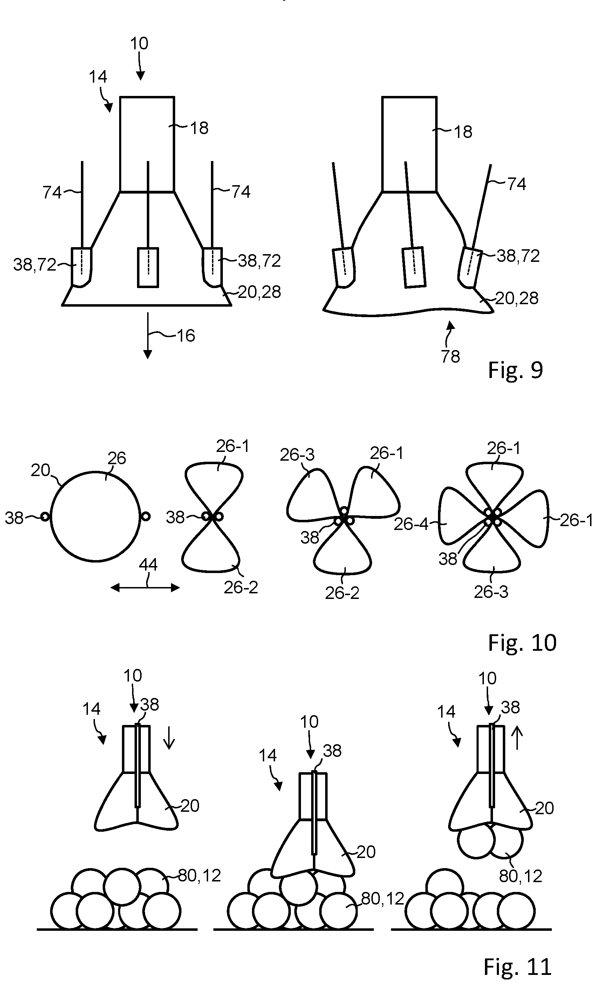

Wie in Figur 9 beispielhaft dargestellt, können die Verformungselemente 38 aber auch an einem zu dem Anlageabschnitt 28 benachbarten Wandungsabschnitt, also näher zur Saugöffnung 26 angeordnet sein. Dies ermöglicht es, die Saugöffnung 26 asymmetrisch zu verformen und bspw. den Anlageabschnitt 28 (Dichtlippe 20) lokal aus einer ursprünglichen Saugebene abzuheben, z.B. um sich einer Kontur eines Greifobjektes 12 anzupassen (vgl. Figur 9, mit Pfeil 78 markierter Bereich).

Figur 10 zeigt weitere beispielhafte Ausgestaltungen eines Sauggreifers 10 in einer Untersicht auf die Saugöffnung 26, bei welchen die Verformungseinrichtung 36 dazu ausgebildet ist, die Saugkörperwandung 20 zumindest im Bereich des Anlageabschnittes 28 lokal zusammenzudrücken und somit die Saugöffnung 26 in mehrere Teilsaugöffnungen zu unterteilen.

Die beiden linken Abbildungen der Figur 10 zeigen dabei eine erste beispielhafte Ausgestaltung, bei der die Verformungseinrichtung 36 zwei Verformungselemente 38 aufweist, welche orthogonal zur Hauptrichtung 16 (entlang der zweiten Richtung 44) aufeinander zu bewegbar sind, sodass die Saugkörperwandung 20 ausgehend von einer ganz links gezeigten Ausgangskonfiguration lokal, im Beispiel mittig, zusammengedrückt werden kann (vgl. zweite Abbildung von links). Im zusammengedrückten Zustand ist die Saugöffnung 26 dann in zwei Teilsaugöffnungen 26-1, 26-2 unterteilt.

Die beiden rechten Abbildungen in Figur 10 zeigen weitere beispielhafte Ausgestaltungen, bei denen drei bzw. vier Verformungselemente 38 vorgesehen sind, sodass die Saugöffnung 26 in drei oder vier Teilsaugöffnungen 26-1, 26-2, 26-3, 26-4 unterteilt werden kann.

Wie in Figur 11 beispielhaft dargestellt, ermöglicht es eine solche Ausgestaltung mit Teilsaugöffnungen 26-1, 26-2, 26-3, 26-4 beispielsweise Stückgüter 80, welche im Vergleich zu der unverformten Saugöffnung 26 geringe Abmessungen aufweisen, selektiv zu greifen.

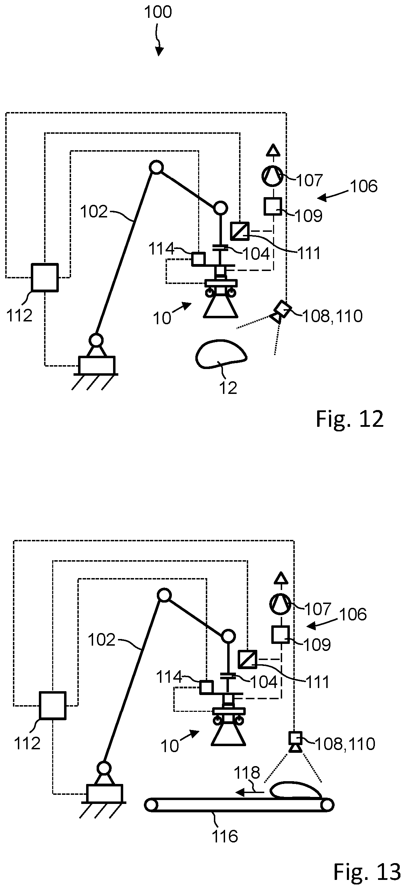

Figur 12 zeigt in vereinfachter schematischer Darstellung eine Handhabungsanlage, welche insgesamt mit dem Bezugszeichen 100 bezeichnet ist. Die Handhabungsanlage 100 weist einen vorstehend beschriebenen Sauggreifer 10 und einen Manipulator 102 zum Verlagern des Sauggreifers 10 auf. Lediglich beispielhaft ist in Figur 12 der Sauggreifer 10 gemäß Figur 1 gezeigt. Der Sauggreifer 10 kann aber auch andere der vorstehend beschriebenen Ausgestaltungen einnehmen.

Der Sauggreifer 10 kann beispielsweise über eine grundsätzlich bekannte Kopplungseinrichtung 104 (z.B. Schnellkupplung) an dem Manipulator 102 gehaltert sein. Der Manipulator 102 kann als Roboter, insbesondere Mehrachs-Roboter, ausgebildet sein. Die Handhabungsanlage 100 umfasst im Beispiel außerdem eine Unterdruckversorgungseinrichtung 106 zur Versorgung des Sauggreifers 10 mit Unterdruck. Die Unterdruckversorgungseinrichtung 106 umfasst beispielhaft einen Unterdruckerzeuger 107 (bspw. Pumpe), eine optionale Ventilvorrichtung 109 und einen optionalen Drucksensor 111.

Die Handhabungsanlage 100 umfasst außerdem eine Erfassungseinrichtung 108 zum Erfassen einer Geometrie eines zu greifenden Greifobjektes 12. Beispielhaft kann die Erfassungseinrichtung 108 eine oder mehrere Kameras 110 zum Aufnehmen eines Abbildes des Greifobjektes 12 umfassen. Die Erfassungseinrichtung 108 kann außerdem eine Auswerteeinrichtung zum Analysieren eines von der Kamera 110 aufgenommenen Bildes aufweisen. Die Auswerteeinheit kann Teil einer Steuereinrichtung 112 der Handhabungsanlage 100 sein (siehe unten).

Wie vorstehend erwähnt, kann die Handhabungsanlage 100 alternativ oder zusätzlich zu der Erfassungseinrichtung 106 eine Identifizierungseinrichtung zum Identifizieren eines Greifobjektes 12, bspw. in Form eines Barcode-Lesers, aufweisen.

Die Handhabungsanlage 100 umfasst außerdem eine Steuereinrichtung 112 zur Ansteuerung der Handhabungsanlage 100. Die Steuereinrichtung 112 ist insbesondere zum Ansteuern des Manipulators 102, der Unterdruckversorgungseinrichtung 106 und der Erkennungseinrichtung 108 ausgebildet. Die Steuereinrichtung 112 ist vorzugsweise außerdem zur Ansteuerung der Verformungseinrichtung 36, insbesondere einer Aktorik 48 der Verformungseinrichtung 36, ausgebildet. Im dargestellten Beispiel weist der Sauggreifer 10 eine mit der Steuereinrichtung 112 zusammenwirkende Sub-Steuerung 114 zur Ansteuerung der Verformungseinrichtung 36 auf.

Wie vorstehend erwähnt, kann zum Greifen eines Greifobjektes 12 dieses zunächst mittels der Erfassungseinrichtung 108 analysiert werden, insbesondere deren äußere Gestalt. Dies kann beispielsweise das Aufnahmen eines Abbildes des Greifobjektes 12 mittels der Kamera 110 und das anschließende Analysieren des Bildes mittels Methoden der Bildverarbeitung umfassen. Insbesondere können unter Verwendung der Erfassungseinrichtung 108 Geometrie-Daten ermittelt werden, welche eine Geometrie, insbesondere die äußere Gestalt des Greifobjektes 12, repräsentieren. Die Geometrie-Daten können dann bspw. auf einer nicht-flüchtigen Speichereinrichtung der Steuereinrichtung 112 hinterlegt werden. Auf Basis der Geometrie-Daten kann dann die Verformungseinrichtung 36 angesteuert werden, um die Saugöffnung 26 an eine Geometrie des Greifobjekts 12 anzupassen (Details siehe oben). Danach kann dann der Sauggreifer 10 mittels des Manipulators 102 an das Greifobjekt 12 angefahren werden und der Elastomersaugkörper 14 mit der Dichtlippe 30 auf das Greifobjekt 12 aufgesetzt werden. Sodann kann das Greifobjekt 12 angesaugt und ggf. verlagert werden.

Figur 13 zeigt eine weitere beispielhafte Ausgestaltung einer Handhabungsanlage 100, welche identisch zu der Handhabungsanlage 100 gemäß Figur 12 aufgebaut ist, jedoch außerdem eine Fördereinrichtung 116 in Form eines Stetigförderers (bspw. Förderband) aufweist, um Greifobjekte 12 zu einer Handhabungsstation zu fördern. Bei einer solchen Ausgestaltung kann beispielsweise an einer in Förderrichtung 118 der Handhabungsstation vorgelagerten Erfassungsstation das Greifobjekt 12 in seiner Geometrie charakterisiert oder zumindest identifiziert werden und dann - insbesondere während einer Weiterförderung des Greifobjektes 12 zu der Handhabungsstation - die Verformungseinrichtung 36 angesteuert werden, um die Saugöffnung 36 des Elastomersaugkörpers 14 an die Geometrie des Greifobjektes 12 anzupassen.

## Patentansprüche

1. Sauggreifer (10) zum Greifen eines Gegenstands (12) mittels Unterdruck, umfassend
- einen Elastomersaugkörper (14), welcher sich entlang einer Hauptrichtung (16) erstreckt, wobei der Elastomersaugkörper (14) einen Basisabschnitt (18) und eine von dem Basisabschnitt (18) ausgehende, flexibel verformbare Saugkörperwandung (20) aufweist, welche einen durch eine Saugöffnung (26) offenen Saugraum (24) begrenzt,
- eine Verformungseinrichtung (36), welche dazu ausgebildet ist, insbesondere vor dem Ansaugen eines Greifobjektes (12), die Saugkörperwandung (20) zu verformen, um eine Konfiguration der Saugöffnung (26), insbesondere deren Form und Größe, zu verändern.

2. Sauggreifer (10) nach Anspruch 1, wobei die Verformungseinrichtung (36) dazu ausgebildet ist, die Saugkörperwandung (20) asymmetrisch zu verformen, insbesondere derart, dass die Saugöffnung (26) ausgehend von einer, insbesondere rotationssymmetrischen, Ausgangskonfiguration in einer ersten Richtung verkleinert und in einer zweiten Richtung vergrößert wird.

3. Sauggreifer (10) nach einem der vorherigen Ansprüche, wobei die Verformungseinrichtung (36) wenigstens ein Verformungselement (38) aufweist, welches zum Verformen der Saugkörperwandung (20) relativ zu dem Elastomersaugkörper (14) verstellbar ist, insbesondere wobei die Verformungseinrichtung (36) außerdem eine Aktorik (48) zum Verstellen des wenigstens einen Verformungselements (38) aufweist, wobei insbesondere vorgesehen ist, dass das wenigstens eine Verformungselement (38) in einer zu der Hauptrichtung parallelen ersten Richtung (42) verstellbar, in einer zu der Hauptrichtung (16) geneigten, insbesondere orthogonalen, zweiten Richtung (44) verstellbar und/oder um eine zu der Hauptrichtung (16) orthogonalen dritten Richtung drehbar- oder verkippbar ausgebildet ist.

4. Sauggreifer (10) nach einem der vorherigen Ansprüche, wobei die Verformungseinrichtung (36) wenigstens zwei voneinander unabhängig verstellbare Verformungselemente (38) aufweist, um die Saugkörperwandung (20) aus verschiedenen Richtungen zu verformen.

5. Sauggreifer (10) nach einem der Ansprüche 1 bis 3, wobei die Verformungseinrichtung (36) zwei an gegenüberliegenden Seiten des Elastomersaugkörpers (14) angeordnete und insbesondere an gegenüberliegenden Außenseiten (40) der Saugkörperwandung (20) angreifende Verformungselemente (38) aufweist.

6. Sauggreifer (10) nach dem vorherigen Anspruch, wobei die Verformungselemente (38) in einer zu der Hauptrichtung (16) parallelen ersten Richtung (42) verstellbar sind, wobei ein Abstand (52) der Verformungselemente (38) in einer zu der Hauptrichtung (16) orthogonalen zweiten Richtung (44) geringer ist als ein Durchmesser (54) der Saugöffnung (26) in deren Ausgangskonfiguration, sodass durch Verstellen der Verformungselemente (38) entlang der ersten Richtung (42) die Saugkörperwandung (20) verformbar, insbesondere zusammendrückbar, ist, um eine Konfiguration der Saugöffnung (26) zu verändern.

7. Sauggreifer (10) nach einem der Ansprüche 5 oder 6, wobei die Verformungselemente (38) plattenförmig ausgebildet sind und insbesondere über ein sich orthogonal zu der Hauptrichtung (16) erstreckendes Verbindungselement (56) miteinander verbunden sind.

8. Sauggreifer (10) nach einem der Ansprüche 5 bis 7, wobei die Verformungselemente (38) im Verlauf ihrer Erstreckung in Hauptrichtung (16) eine unterschiedliche Elastizität aufweisen, insbesondere in Hauptrichtung (16) eine Elastizität zunimmt.

9. Sauggreifer (10) nach einem der Ansprüche 5 oder 6, wobei die Verformungselemente (38) durch Abschnitte eines im Wesentlichen U-förmigen Verformungsteils (62) gebildet sind.

10. Sauggreifer (10) nach einem der Ansprüche 5 oder 6, wobei die Verformungseinrichtung (36) ein, insbesondere plattenförmiges, Verformungsteil (64) aufweist, wobei das Verformungsteil (64) eine, insbesondere asymmetrische, Aussparung, insbesondere Öffnung (66), aufweist, in welches der Elastomersaugkörper (14) einführbar ist, wobei die Aussparung, insbesondere Öffnung (66), in zumindest einer Richtung eine geringere Öffnungsbreite (68) als die Saugöffnung (26) in deren Ausgangskonfiguration aufweist.

11. Sauggreifer (10) nach Anspruch 3, wobei das wenigstens eine Verformungselement (38) mit der Saugkörperwandung (20) fest verbunden ist, sodass ein Verkippen des Verformungselementes (38) um eine insbesondere zu der Hauptrichtung (16) orthogonalen Kipprichtung zu einer Verformung der Saugkörperwandung (20) führt.

12. Sauggreifer (10) nach einem der vorherigen Ansprüche, wobei die Verformungseinrichtung (36) dazu ausgebildet ist, die Saugkörperwandung (20) derart zu verformen, insbesondere einen die Saugöffnung (26) begrenzenden Anlageabschnitt (28) der Saugkörperwandung (20) derart zusammenzudrücken, dass die Saugöffnung (26) in wenigstens zwei Teilsaugöffnungen (26-1, 26-2, 26-3, 26-4) unterteilt wird.

13. Verfahren zum Greifen eines Greifobjektes (12) mit einem Sauggreifer (10) nach einem der vorherigen Ansprüche, umfassend:
- Verändern einer Konfiguration der Saugöffnung (26) durch Verformen der Saugkörperwandung (20) mittels der Verformungseinrichtung (36), insbesondere durch Verstellen des wenigstens einen Verformungselements (38) relativ zu dem Elastomersaugkörper (14), wobei insbesondere vorgesehen ist, dass das Verformen der Saugkörperwandung (20) in Abhängigkeit einer Geometrie des zu greifenden Greifobjektes (12) erfolgt;
- Aufsetzen des Elastomersaugkörpers (14) auf das Greifobjekt (12) und Ansaugen des Greifobjektes (12).

14. Verfahren nach Anspruch 13, außerdem umfassend, vor dem Verändern der Konfiguration der Saugöffnung (26):
a. Erfassen einer Geometrie eines zu greifenden Greifobjektes (12) mittels einer Erfassungseinrichtung (108), insbesondere Kamera (110).
und/oder
b. Identifizieren des zu greifenden Greifobjektes (12) mittels einer Identifizierungseinrichtung, insbesondere Auslesen eines Identifikationsmerkmals des zu greifenden Gegenstands mittels einer Identifikationseinrichtung, bspw. Barcode, und Bereitstellen von Geometrie-Informationen, welche eine Geometrie des identifizierten Greifobjektes repräsentieren

15. Handhabungsanlage (100), umfassend:
- einen Sauggreifer (10) nach einem der Ansprüche 1 bis 12,
- einen Manipulator (102) zum Verlagern des Sauggreifers (10)
- (optional) eine Erfassungseinrichtung (108) zum Erfassen einer Geometrie eines zu greifenden Greifobjektes (12);
- (optional) eine Identifizierungseinrichtung zur Identifizierung eines zu greifenden Greifobjektes (12);
- eine Steuereinrichtung (112) zum Ansteuern der Verformungseinrichtung (36) des Sauggreifers und des Manipulators (102) und, optional, der Erfassungseinrichtung (108), wobei die Steuereinrichtung (112) dazu eingerichtet ist, das Verfahren nach einem der Ansprüche 13 oder 14 durchzuführen.
